# EUROPÄISCHE PATENTANMELDUNG

(11) **EP 0 527 409 A1**
(43) Veröffentlichungstag der Anmeldung: **17.02.1993**
(21) Anmeldenummer: 92113152.0
(22) Anmeldetag: 01.08.1992
(51) Int. Cl.: A47J 37/08

(54) **Brotröster mit einem Heizsystem**

(30) Priorität: 10.08.1991 DE 4126517
(71) Anmelder: Braun Aktiengesellschaft, Frankfurt am Main (DE)
(72) Erfinder: Pfeiffer, Bernd, W-6370 Oberursel 5 (DE); Hahnewald, Andrea, Mercat (ES)

(57) **Zusammenfassung**

Es sind Brotröster mit einem einen Heizstab (2) aufweisenden Heizsystem und mit einem Ausbuchtungen aufweisenden, ansonsten aber ebenen Reflektorblech (1) bekannt. Das Reflektorblech lenkt die vom Heizstab (2) ausgehende und nicht auf ein Röstgut (7) gerichtete Wärmestrahlung zumindest teilweise wieder auf das Röstgut (7) um. Die Ausbuchtungen können aus im wesentlichen ebenfalls ebenen Blechvorsprüngen (4) bestehen oder als hammerschlagartiges Muster oder als kalottenförmige Kugelvorsprünge (8) ausgebildet sein. Die Blechvosprünge (4) sind vorzugsweise Matten auf der dem Röstgut (7) zugewandten Seite (3) des Reflektorbleches (1) angeordnet und unter einem Winkel (X) aus der Ebene des Reflektorbleches (1) in Richtung auf den oberen Bereich (10) des Reflektorbleches (1) ausgeschwenkt.

## Beschreibung

Die Erfindung betrifft einen Brotröster mit einem Heizsystem aus einem Heizstab und einem Reflektorblech, welches die vom Heizstab ausgehende und nicht auf ein Röstgut gerichtete Wärmestrahlung zumindest teilweise wieder auf das Röstgut umlenkt.

Es ist ein gattungsgemäßer, sogenannter Langschlitztoaster der Firma Rowenta mit der Typenbezeichnung TO 38 bekannt, der zur Erzielung eines verbesserten Bräunungsergebnisses ein spezielles Heizsystem aufweist. Das Heizsystem besitzt einen Heizleiter, dessen Heizwendel mit unterschiedlichen Steigungen gewickelt ist. In den Wicklungsbereichen des Heizleiters, die den Kanten des Röstguts gegenüber liegen, besitzt der Heizleiter Windungsabschnitte mit einer größeren Steigung als in seinen übrigen Wicklungsbereichen. Insbesondere die Kantenbereiche des Röstgutes benötigen nämlich weniger Energie für den Bräunungsvorgang. Aufgrund der größeren Steigung des Heizleiters werden die Kantenbereiche des Röstgutes in einem geringeren Maße mit Wärmeenergie versorgt, und es wird eine gleichmäßigere Bräunung über die gesamte Fläche des Röstgutes erzielt.

Der bekannte Heizleiter weist die beiden folgenden wesentlichen Nachteile auf. Zum einen erfordert seine Herstellung aufgrund der Existenz von Abschnitten unterschiedlicher Steigung einen höheren Fertigungsaufwand. Zum anderen hat sich gezeigt, daß der Heizleiter sich nach einer bestimmten Lebensdauer entspannt, so daß über die gesamte Länge weitestgehend wieder eine einheitliche Steigung vorliegt. Der vorteilhafte Effekt, daß nur die Mittenbereiche des Röstgutes verstärkt mit Wärmeenergie versorgt werden, geht so wieder verloren.

Es ist daher Aufgabe der Erfindung, einen Brotröster mit einem Heizsystem zu schaffen, der über seine gesamte Lebensdauer für eine gleichmäßigere Bräunung des Röstguts sorgt und einfach herzustellen ist.

Die Aufgabe der Erfindung wird durch die Merkmale des kennzeichnenden Teils der Patentansprüche 1, 11 und 12 gelöst.

Nach der Erfindung weist das Reflektorblech auf der dem Röstgut zugewandten Seite eine durch gezielte Veränderung seiner Makrostruktur erzielte gleichmäßigere Verteilung der Intensität der reflektierten Strahlung auf. Gegenüber den aus dem Stand der Technik bekannten, im wesentlichen ebenen und hochglänzenden Reflektorblechen, die hohe Totalreflektionswerte und geringe Diffusionsreflektionswerte aufweisen, weil der größte Teil der einfallenden Wärmestrahlung gerichtet zurückgeworfen wird, bewirkt die erfinderische Maßnahme eine gleichmäßigere Intensitätsverteilung der Wärmestrahlung auf dem Röstgut. Somit wird vermieden, daß bestimmte Bereiche der Oberfläche des Röstgutes konzentriert mit Wärmestrahlung beaufschlagt werden.

Erfindungsgemäß wird die gleichmäßigere Intensitätsverteilung durch eine gezielt aus dem im wesentlichen ebenen Reflektorblech herausgearbeitete Makrostruktur in Form von Ausbuchtungen erzeugt. Bei den auf das Röstgut gerichteten Ausbuchtungen kann es sich um Blechvorsprünge, ein hammerschlagartiges Muster oder um kalottenförmige Kugelvorsprünge handeln. Alle Ausführungsformen können auch in Kombination Anwendung finden. In weitergehenden Ausführungsformen können die Makrostrukturen mit Mikrostrukturen auf der Oberfläche des Reflektorbleches kombiniert werden.

Mittels der makrostrukturförmigen Ausbuchtungen läßt sich der Vorteil erzielen, daß bestimmte Röstgutbereiche kontrolliert und gezielt mit einer verminderten Wärmestrahlung versorgbar sind. Die gezielte Zufuhr von Wärmestrahlung ist bei bestimmten Brotsorten von Vorteil, die insbesondere in den Kantenbereichen leicht vor- und ausgetrocknet sind. Dadurch ist nämlich der Wärmebedarf des Röstgutes in den Kantenbereichen geringer und die Bräunung erfolgt schneller.

Nach einer ersten Ausführungsform der Ausbuchtungen sind makrostrukturförmigen Blechvorsprünge vorgesehen, die bevorzugt den Mittenbereich des Röstgutes mit Wärmestrahlung versorgen. Durch deren nach oben gerichtete Verschwenkung wird der obere Bereich des Röstgutes verstärkt mit Wärmestrahlung beaufschlagt, da hier der Röstvorgang durch die von unten aufsteigende Feuchtigkeit verzögert wird.

Bei sogenannten Langschlitztoastern lassen sich leicht mehrere Blechvorsprünge längs des Reflektorbleches anordnen, so daß beispielsweise zwei Toastscheiben bevorzugt im Mittenbereich mit Wärmestrahlung versorgt werden.

Besonders gute Röstergebnisse lassen sich erzielen, wenn die Vorsprünge trapezförmig ausgebildet und im Bodenbereich des Reflektorbleches angeordnet sind.

Besonders günstige Ergebnisse werden dann erzielt, wenn die obere Trapezkante der trapezförmigen Blechvorsprünge länger ist als die untere Trapezkante.

Die Wirkung der trapezförmigen Blechvorsprünge in Richtung auf einen gleichmäßigeren Bräunungsgrad wird weiter gesteigert, wenn an den Schrägkanten der Blechvorsprünge dreieckförmige Seitenflügel vorgesehen sind, die gegenüber der Ebene der Blechvorsprünge abgeknickt sind. Durch die dreieckförmigen Seitenflügel werden besonders die unteren Kanten des Röstgutes vor einer ungleichmäßigen und übermäßigen Bräunung geschützt. Die dreieckförmigen Seitenflügel bewirken weiter eine diffuse Strahlungsverteilung, die sich besonders im unteren Bereich an den Kanten des Röstgutes auswirkt.

Wird die Oberfläche des Reflektorbleches matt ausgebildet, was beispielsweise durch entsprechendes Walzen des Bleches oder durch Sandstrahlen erfolgen kann, tritt darüber hinaus eine diffuse Verteilung der reflektierten Wärmestrahlung ein. Dabei ist es vorteilhaft, wenn die matt ausgebildete Oberfläche eine Rauhtiefe aufweist, die einen Diffusionsreflektionswert von mindestens 60 % erzeugt. Mit modernen Fertigungsmethoden lassen sich sogar hohe Diffusionsreflektionswerte mit 70 bis 80 % erzielen, so daß die Wärmestrahlung zwar diffus, jedoch unter geringen Verlusten dem Röstgut zugeführt wird.

In anderen Ausführungsformen können die makroskopischen Ausbuchtungen ein hammerschlagartiges Muster oder kalottenförmige Kugelvorsprünge sein, die in das Reflektorblech eingearbeitet sind. Auch das Einarbeiten dieser makroskopischen Ausbuchtungen, die eine gezielte Verteilung der Intensität der reflektierten Strahlung bewirkt, bereitet keine technischen Schwierigkeiten und ist kostengünstig ausführbar.

Ein wesentlicher Vorteil der Erfindung besteht darin, daß sowohl die Mikro- als auch die Makrostrukturen während der Lebensdauer des Heizsystems keinerlei Veränderungen unterworfen sind und deren Wirkung daher über die gesamte Lebensdauer des Brotrösters erhalten bleibt.

Nachfolgend wird die Erfindung anhand der Zeichnung näher beschrieben. Es zeigen:
- Fig. 1: eine perspektivische Ansicht des Heizsystems eines Brotrösters nach der Erfindung,
- Fig. 2: eine Vorderansicht eines trapezförmigen Blechvorsprungs aus Fig. 1;
- Fig. 3: einen Schnitt durch das Reflektorblech des Heizsystems aus Fig. 1 entlang der Schnittlinie A-A; und
- Fig. 4: eine Vorderansicht einer weiteren Ausführungsform des Reflektorbleches nach der Erfindung.

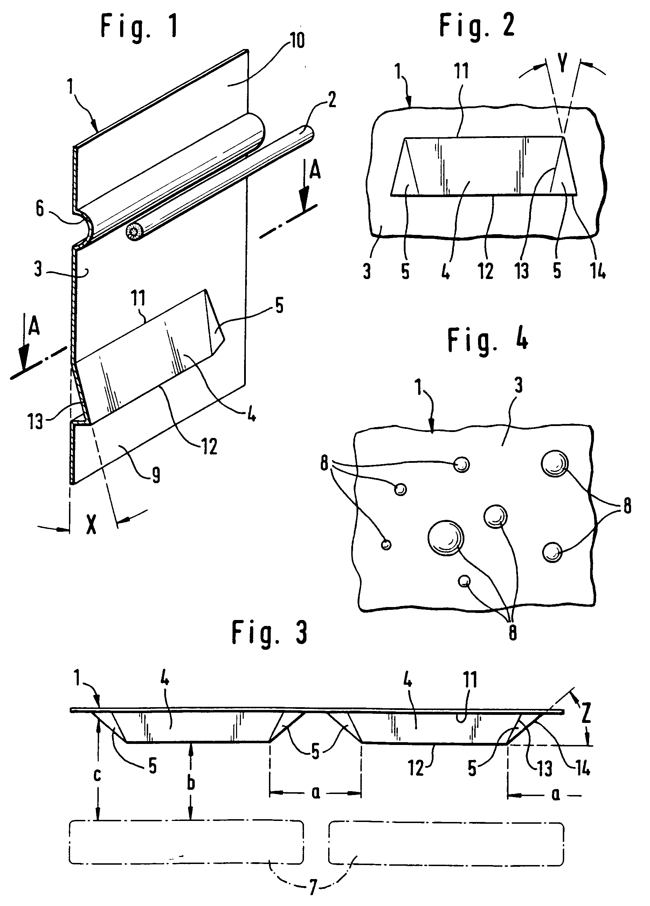

In Fig. 1 ist das Heizsystem eines Brotrösters, bestehend aus einem Heizstab 2 und einem Reflektorblech 1 schematisch und perspektivisch dargestellt. Üblicherweise weist ein Brotröster symmetrisch zum Röstgut 7 (vgl. Fig. 3) ein zweites Heizsystem aus Heizstab 2 und Reflektorblech 1 auf, das zur vereinfachten Darstellung in Fig. 1 nicht gezeigt ist. Der Heizstab 2 ist dem Reflektorblech 1 vorgelagert und ist zwischen dem Reflektorblech 1 und dem Röstgut angeordnet. Somit bestrahlt der Heizstab 2 mit seiner Vorderseite das Röstgut direkt und die von seiner Rückseite, das heißt dem Röstgut abgewandten Seite, ausgehende Wärmestrahlung wird durch das Reflektorblech 1 auf das Röstgut zurückgeworfen. Der Heizstab 2 kann aus einem Quarzstab mit innenliegendem Heizwendel, einem Keramikstab mit außenliegendem Heizwendel oder einem Keramikstab mit innenliegendem Heizwendel bestehen. Die nachfolgend beschriebene Erfindung ist für alle Formen von Heizstäben anwendbar.

Erfindungsgemäß kann die dem Röstgut zugewandte Seite 3 des Reflektorblechs 1 eine Mikro- oder Makrostruktur aufweisen. Die Mikrostruktur ergibt sich einmal aus dem Material selbst, das sich bei rasterelektronischen Vergrößerungen als zerklüftete Ebene erweist, oder dadurch daß dieses zusätzlich mattiert werden kann. Die Mattierung kann durch Ätzen, Walzen, Sandstrahlen usw. erzielt werden.

Die Figuren 1 bis 4 zeigen zwei bevorzugte Ausführungsformen von Makrostrukturen. Durch die gleichzeitige Ausbildung einer Mikro- und Makrostruktur entsteht ein die reflektierende Strahlung gezielt und diffus abstrahlendes Reflektorblech 1. Gegenüber im wesentlichen ebenen und hochglänzenden Reflektorblechen, die den größten Teil der einfallenden Wärmestrahlung gerichtet zurückwerfen, bietet die diffus reflektierende, dem Röstgut 7 zugewandte Seite 3 des Reflektorbleches 1 den Vorteil, daß die Wärmestrahlung gestreut und damit gleichmäßiger über das Röstgut 7 verteilt wird. Dabei besitzen diffus abstrahlende Oberflächenstrukturen auch im Vergleich zu hochglänzenden Reflektorblechen immer noch hohe Totalreflektionswerte, nämlich bis zu ca. 85 %. Darüber hinaus erreichen matte Reflektorbleche 1 hohe Diffusionsreflektionswerte in der Größenordnung von 70 bis 80 %. Mikro- und Makrostrukturen am Reflektorblech des erfindungsgemäßen Heizsystems können einander somit nutzbringend ergänzen.

Neben der diffus abstrahlenden Oberflächen-Mikrostruktur, die von der Rauhtiefe abhängt, zeigt Fig. 1 einen trapezförmigen Blechvorsprung 4, der im Bodenbereich 9 des Reflektorbleches 1 und unterhalb des Heizstabes 2 angeordnet ist. Der trapezförmige Blechvorsprung 4 dient zur verbesserten Versorgung des Mittenbereiches des Röstgutes mit Wärmestrahlung und ist um einen Anstellwinkel X, der bevorzugt 10° beträgt, in Richtung auf den Heizstab 2 bzw. die obere Seite 10 des Bleches 1 verschwenkt. Es können mehrere kleinere Blechvorsprünge 4 vorgesehen sein, die auf den Mittenbereich des Röstgutes ausgerichtet sind. Meist reichen jedoch besonders bei Langschlitztoastern schon zwei Blechvorsprünge 4 aus, die längs des Bleches 1 im Bodenbereich 9 nebeneinander angeordnet sind. So lassen sich z.B. zwei Toastscheiben gleichzeitig im Mittenbereich verstärkt mit Wärmestrahlung versorgen.

Bevorzugt ist die obere Trapezkante 11 länger als die untere Trapezkante 12 (in Fig. 1 nicht dargestellt). Die Trapezform bewirkt, daß besonders die unteren Kanten und Randbereiche des Röstgutes weniger mit diffuser Strahlungsenergie versorgt werden. Diese Bereiche sind hinsichtlich des Röstvorgangs Problembereiche, da sich hier eine gewisse Austrocknung vor dem Röstgvorgang oft nicht vermeiden läßt und daher die Bräunung schneller einsetzt. Die oberen Randbereiche des Röstgutes werden langsamer gebräunt, weil die aus dem Mittenbereich austretende Feuchtigkeit den Bräunungsvorgang verzögert. Daher werden die unteren Rand- -und Kantenbereiche des Röstgutes von der Wärmestrahlung entlastet. Bevorzugt weist die obere Trapezkante 11 eine Kantenlänge von 100 mm und die untere Trapezkante 12 eine Länge von 80 mm auf. Ebenso sind beide Trapezkanten 11, 12 bevorzugt 35 mm voneinander entfernt.

Die Wirkung der trapezförmigen Blechvorsprünge 4 kann weiter gesteigert werden, indem dreieckförmige Seitenflügel 5 an den Seitenkanten 13 des Trapezes ausgebildet sind. In Fig. 2 ist ein Blechvorsprung 4 mit zwei dreieckförmigen Seitenflügeln 5 in der Vorderansicht und in Fig. 3 im Schnitt entlang der Schnittlinie A-A aus Fig. 1 dargestellt. Bevorzugt weisen die Seitenflügel 5 einen Öffnungswinkel Y von 25° auf. Zwischen der unteren Trapezkante 12 und der Unterkante 14 des Seitenflügels 5 besteht ein Winkel Z von ungefähr 40°. Wie in Fig. 1 gestrichelt angedeutet, steht die Fläche des dreieckförmigen Seitenflügels 5 gekippt zu dem ausgeschwenkten Blechvorsprung 4 und der Seite 3 des Bleches 1. Die Seitenflügel 5 sind um so weiter gekippt, um so größer der Ausschwenkwinkel X (Fig. 1) ist. Das Kippen und Vorhandensein der Seitenflügel 5 bewirkt eine weitere Entlastung der unteren Kantenbereiche des Röstgutes von reflektierter Strahlung.

In Fig. 3 sind die trapezförmigen Blechvorsprünge 4 und das Röstgut 7 (strichpunktiert) mit Blickrichtung parallel zu der Ebene des Reflektorbleches 1 von oben in den Brotröster dargestellt. Die Bereiche mit weniger auf das Röstgut gerichtete Wärmestrahlung sind in Fig. 3 mit a bezeichnet. Die Bereiche a, die sich mit den Kantenbereichen des Röstgutes decken, ergeben sich durch die vorteilhafte Wirkung der trapezförmigen Vorsprünge 4 und der Seitenflügel 5. Wie weiter aus Fig. 3 ersichtlich, ist der Mittenbereich des Röstgutes 7 in einem kürzeren Abstand b zum Reflektorblech 1 bzw. den Blechvorsprüngen 4 als die Randbereiche angeordnet. Die Randbereiche des Röstgutes befinden sich in einem Abstand c zu dem Reflektorblech 1. Durch den größeren Abstand c werden die Randbereiche zusätzlich von reflektierter Strahlung entlastet.

Neben den bisher gezeigten makroskopischen Oberflächenstrukturen kann das Reflektorblech 1 auch Abschnitte oder in seiner gesamten Fläche ein hammerschlagähnliches Muster aufweisen, wobei die Vorsprünge auf das Röstgut gerichtet sind. In einer anderen Ausführungsform nach Fig. 4 besteht die Oberflächenstruktur aus Ausbuchtungen, die als kalottenförmige Kugelvorsprünge 8 ausgebildet sind. Die Verteilung und der Durchmesser der kalottenförmigen Kugelvorsprünge 8, die wiederum als Zerstreuungslinsen wirken, kann je nach Anwendungsfall vollkommen unterschiedlich sein. Alle Ausführungsformen von makroskopischen Strukturen können miteinander kombiniert werden. So kann beispielsweise der Blechvorsprung 4 ein hammerschlagartiges Muster (nicht dargestellt) oder kalottenförmige Vorsprünge 8 aufweisen.

## Patentansprüche

1. Brotröster mit einem einen Heizstab (2) aufweisenden Heizsystem und mit einem Ausbuchtungen aufweisenden, ansonsten aber ebenen Reflektorblech (1), welches die vom Heizstab (2) ausgehende und nicht auf ein Röstgut (7) gerichtete Wärmestrahlung zumindest teilweise wieder auf das Röstgut (7) umlenkt
**dadurch gekennzeichnet**,
daß die Ausbuchtungen aus im wesentlichen ebenfalls ebenen Blechvorsprüngen (4) bestehen, die auf der dem Röstgut (7) zugewandten Seite (3) des Reflektorbleches (1) angeordnet sind und unter einem Winkel (X) aus der Ebene des Reflektorbleches (1) in Richtung auf den oberen Bereich (10) des Reflektorbleches (1) ausgeschwenkt sind.

2. Brotröster nach Anspruch 1,
**dadurch gekennzeichnet**,
daß längs des Bodenbereichs (9) des Reflektorbleches (1) mehrere, vorzugsweise zwei, trapezförmige Blechvorsprünge (4), vorgesehen sind.

3. Brotröster nach Anspruch 2,
**dadurch gekennzeichnet**,
daß die obere Trapezkante (11) der trapezförmigen Blechvorsprünge (4), mit einer Länge von vorzugsweise 100 mm, länger ist als die untere Trapezkante (12), mit einer Länge von vorzugsweise 80 mm.

4. Brotröster nach Anspruch 2,
**dadurch gekennzeichnet**,
daß die obere Trapezkante (11) im Abstand von 35 mm von der unteren Trapezkante (12) angeordnet ist.

5. Brotröster nach Anspruch 2,
**dadurch gekennzeichnet**,
daß die trapezförmigen Blechvorsprünge (4) an den Schrägkanten (13) dreieckförmige Seitenflügel (5) aufweisen.

6. Brotröster nach Anspruch 5,
**dadurch gekennzeichnet**,
daß die dreieckförmigen Seitenflügel (5) einen Öffnungswinkel (Y) von vorzugsweise 25° aufweisen.

7. Brotröster nach Anspruch 5 und 6,
**dadurch gekennzeichnet**,
daß die Unterkante (14) der Seitenflügel (5) einen Winkel (Z) von vorzugsweise 40° zu der unteren Trapezkante (12) einnimmt.

8. Brotröster nach Anspruch 1,
**dadurch gekennzeichnet**,
daß der Winkel (X) vorzugsweise im Bereich von etwa 10° liegt.

9. Brotröster nach Anspruch 1,
**dadurch gekennzeichnet**,
daß das Reflektorblech (1) auf der dem Röstgut zugewandten Seite (3) matt ausgebildet ist und eine Wärmestrahlung diffus abstrahlende Mikrostruktur seiner Oberflächen aufweist.

10. Brotröster nach Anspruch 9,
**dadurch gekennzeichnet**,
daß die Mikrostruktur rauh ausgebildet ist und eine Rauhtiefe aufweist, die einen Diffusionsreflektionswert von mindestens 60 % erzeugt.

11. Brotröster mit einem einen Heizstab (2) aufweisenden Heizsystem und mit einem Ausbuchtungen aufweisenden, ansonsten aber ebenen Reflektorblech (1), welches die vom Heizstab (2) ausgehende und nicht auf ein Röstgut (7) gerichtete Wärmestrahlung zumindest teilweise wieder auf das Röstgut (7) umlenkt
**dadurch gekennzeichnet**,
daß die Ausbuchtungen als ein hammerschlagartiges Muster in dem Reflektorblech (1) ausgebildet sind.

12. Brotröster mit einem einen Heizstab (2) aufweisenden Heizsystem und mit einem Ausbuchtungen aufweisenden, ansonsten aber ebenen Reflektorblech (1), welches die vom Heizstab (2) ausgehende und nicht auf ein Röstgut (7) gerichtete Wärmestrahlung zumindest teilweise wieder auf das Röstgut (7) umlenkt
**dadurch gekennzeichnet**,
daß die Ausbuchtungen kalottenförmige Kugelvorsprünge (8) sind.
